# EUROPEAN PATENT SPECIFICATION

(11) **EP 2 352 989 B1**
(45) Date of publication and mention of the grant of the patent: **06.05.2020**
(21) Application number: 09747933.1
(22) Date of filing: 02.11.2009
(51) Int. Cl.: G01N 21/51, G01N 21/03, G01N 15/02, G01N 21/82, G01N 21/65, G01N 21/53

(54) **SAMPLE ANALYSIS APPARATUS AND A METHOD OF ANALYSING A SAMPLE**
PROBENANALYSEVORRICHTUNG UND VERFAHREN ZUR ANALYSE EINER PROBE
APPAREIL D'ANALYSE D'ÉCHANTILLON ET PROCÉDÉ D'ANALYSE D'ÉCHANTILLON

(30) Priority: 11.11.2008 NL 2002196
(43) Date of publication of application: 10.08.2011
(73) Proprietor: Technobis Group B.V., 1812 SC Alkmaar (NL)
(72) Inventor: McKAY, Benjamin, 1014 BV Amsterdam (NL); BENTSCHAP KNOOK, Dirk, François, 1014 BV Amsterdam (NL); VAN BANNING, Stephan, Olivier, 2071 VH Santpoort Noord (NL); COETZEE, Anita, 2611 KZ Delft (NL)
(74) Representative: EP&C
(86) International application number: PCT/NL2009/000208
(87) International publication number: WO 2010/056109

(56) References cited:
- WO-A1-99/15877
- WO-A2-2007/133780
- JP-A- 10 318 904
- JP-B2- 4 048 848
- NL-C2- 1 026 306
- US-A- 5 768 407
- US-A1- 2005 099 625
- US-A1- 2006 120 566
- US-A9- 2004 252 299
- US-B2- 6 563 653

## Description

The invention relates to a sample analysis apparatus comprising: at least one radiation system constructed and arranged to irradiate the sample in a vial; and an analyser provided with a camera constructed and arranged to analyse the radiation received from the sample in the vial. The invention also relates to a method of analysing a sample comprising: providing a vial with a sample releasable to a holder; and, irradiating the sample in the vial with radiation.

Sample analysis apparatus may be used for analysing samples such as fluids (e.g liquid and gasses) and/or suspensions. In a sample analysis apparatus according to the prior art a radiation system and an analyser may be provided in a vial to analyse the sample in the vial. A disadvantage may be that the sample may contaminate the sample analysis apparatus and/or that the sample analysis apparatus may contaminate the sample. If the sample analysis apparatus is used for analysing crystals growing in the vial the crystals may be growing on the sample analysis apparatus and thereby deteriorating the functioning of the sample analysis apparatus and/or the sample analysis apparatus may influence the growing of the crystals. Alternatively, for example according to NL1026306 the sample analysis apparatus may be mounted to a test tube. If the test tube is to be cleaned, the cleaner should take care not to damage the sample analysis apparatus. JP4048848-B2 discloses a device and method for detecting foreign matters in a transparent container in containing liquid. An image of the container is obtained by imaging means arranged on one side of the container and illumination means arranged on the opposite side.

It is an object of the invention to provide an improved sample analysis apparatus and an improved method of analysing a sample.

According to the invention the sample analysis apparatus is provided with at least one radiation system constructed and arranged to irradiate the sample in a vial; an analyser provided with a camera constructed and arranged to analyse the radiation received from the sample in the vial, wherein the apparatus is provided with a holder constructed and arranged to releasable hold the vial and provided with an optical path for the radiation system to irradiate the sample and for the camera to make images of the sample, wherein the camera comprises a telecentric lens and a detector. The apparatus further comprises a comparing system for comparing a radiation intensity of radiation received from the sample in the vial with a radiation intensity threshold value, and a radiation adjustment system to adjust an intensity of the radiation irradiated by the at least one radiation system if the radiation intensity received from the sample is not equal to the radiation intensity threshold value. The apparatus further is configured to measure the background intensity and to compare the background intensity with a background intensity threshold value, and to increase the background illumination if the background intensity gets lower than the background intensity threshold value and to decrease the background illumination if the background intensity gets higher than the background intensity threshold value.

By having the sample in the vial and holding the sample releasable in the holder it becomes easier to clean the vial after analysing the sample because the vial can be separated from the sample analysis apparatus. The sample in the vial will also not be contaminated by the sample analysis apparatus because it is kept in the vial. Crystals growing in the vial may not be influenced by the sample analysis apparatus because the crystal are kept in the vial and are not in contact with the sample analysis apparatus. The throughput of the sample analysis apparatus is also improved because it is easy to exchange a vial in the holder for the next vial. By using a telecentric lens the size and shape of an image formed of the sample is independent of the distance or position to the sample, which is advantageous for imaging particles that may be moving in the vial.

In the apparatus, advantageously the background is kept at a constant intensity, e.g. grey scale value.

According to a further embodiment the at least one radiation system may irradiate the sample in the vial with pulsed irradiation. The pulsed irradiation may make standstill images of the sample if the sample is moving in the vial, for example caused by stirring in the sample.

According to a further embodiment of the invention the holder comprises a temperature control system provided with a thermometer for controlling the temperature of the vial. The temperature control system may comprise a heater for heating the vial and/or a cooler for cooling the vial.

According to a further embodiment the holder is provided with a hole for releasing or receiving the vial. The at least one radiation system and the camera are constructed and arranged opposite each other with the hole in between so that the at least one radiation system is irradiating the camera with radiation traversing through the vial in the hole.

According to a further embodiment the at least one radiation system and the camera may be arranged on the same side of the hole and the at least one radiation system is arranged for irradiating the sample in the vial from the same direction as the camera is arranged for making images of radiation diffuse reflected form the sample in the vial. The at least one radiation system may comprise a semitransparent mirror arranged between the camera and the hole so as to irradiate the sample in the vial from the same direction as the camera makes images of the sample in the vial.

According to yet a further embodiment the at least one radiation system comprises a ring light around the camera so as to irradiate the sample in the vial from the same direction as the camera is arranged for making images of the sample in the vial.

According to a further embodiment of the invention the apparatus may be provided with two radiation systems, the apparatus being constructed and arranged so that the camera detects radiation traversing through the vial from a first of the two radiation systems and detects radiation diffuse reflected from the sample in the vial from a second of the two radiation systems and the apparatus is provided with a radiation system switching device for switching between irradiation by the first radiation system and irradiation by the second radiation system. If the sample becomes so turbid that there is hardly any radiation traversing through the sample the switching device may switch from backside irradiation from the first radiation system to front side irradiation from the second radiation system.

According to an embodiment of the invention the analyser may be provided with an image processing module for processing of the images made by the camera, the image processing module being provided with software for image analysis of the particle shape and size distribution of particles in the sample in the vial.

According to a further embodiment the telecentric lens may be constructed and arranged as an object-space telecentric lens creating images of the same size for objects at any distance in the sample. Alternatively the telecentric lens may be constructed and arranged as an image-space telecentric lens creating images of the same size regardless of the distance between the lens and the detector. The telecentric lens may be double telecentric.

According to a further embodiment of the invention the invention relates to method of analysing a sample comprising:
providing a vial with a sample releasable to a holder;
irradiating the sample in the vial with radiation;
recording images of the sample in the vial with a camera comprising a telecentric lens and a detector and analysing the images with an image processing module so as to determine information about the particle size and/or size distribution of particles in the sample. The irradiating of the sample comprises:
   comparing a radiation intensity of radiation received from the sample in the vial with a radiation intensity threshold value;
   adjusting an intensity of the irradiated radiation if the radiation intensity received from the sample is not equal to the radiation intensity threshold value; and
   measuring the background intensity and comparing the background intensity with a background intensity threshold value, and increasing the background illumination if the background intensity gets lower than the background intensity threshold value and
   decreasing the background illumination if the background intensity gets higher than the background intensity threshold value.

According to an embodiment of the invention the method further comprises using the information about the particle size and/or size distribution of particles in the sample for changing reaction conditions in the vial. Changing the reaction conditions of the vial may comprise heating or cooling of the vial.

Embodiments of the invention will now be described, by way of example only, with reference to the accompanying schematic drawings in which corresponding reference symbols indicate corresponding parts, and in which:
Figure 1 depicts a schematic top view on a sample analysis apparatus according to a first embodiment of the invention;
Figure 2 depicts a schematic top view on a sample analysis apparatus according to a second embodiment of the invention;
Figure 3 depicts a schematic top view on a sample analysis apparatus according to a third embodiment of the invention; and,
Figure 4 depicts a three dimensional view on a holder constructed for use in a sample analysis apparatus according to the invention.

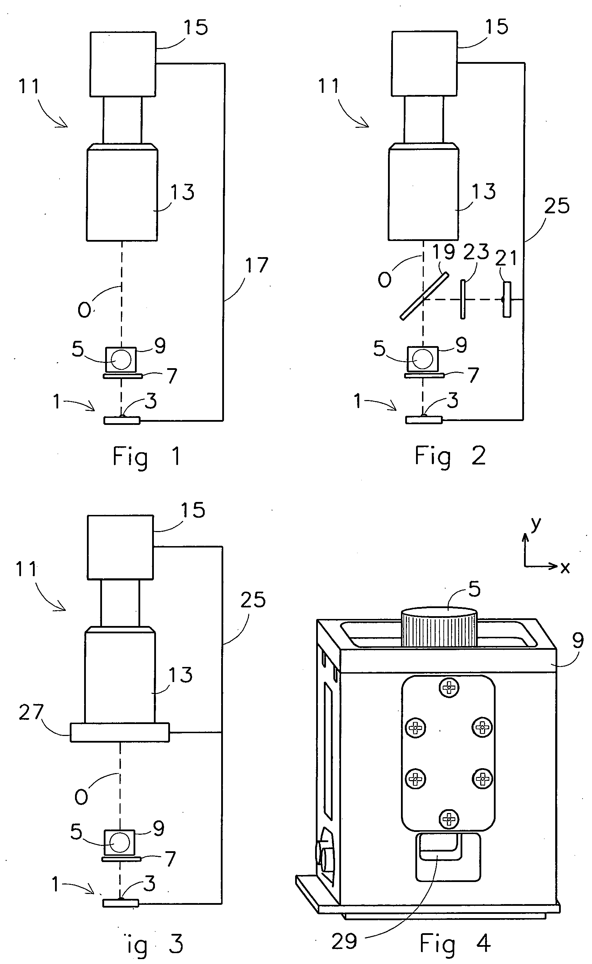

Figure 1 schematically depicts a top view on a sample analysis apparatus according to a first embodiment of the invention. The apparatus comprises a radiation system 1 configured to irradiate a sample in a vial 5. The radiation system 1 may comprise a radiation source or it may receive its radiation from elsewhere, for example by a fibre. The radiation source may be a light emitting diode (LED) 3. An advantage of an LED is that the LED 3 does not generate much heat, which may influence the sample in the vial 5. Another advantage of a LED is that it may generate irradiation with a narrow bandwidth. The user may select the LED with a certain specific wavelength which is advantageously for a certain sample. The wavelength irradiated by the radiation system may be between 300 and 3000 nm, which includes ultraviolet radiation to deep infrared radiation.

The radiation system 1 may provide pulsed irradiation. The sample in the vial 5 may comprise moving particles and by providing pulsed irradiation stand still images can be made from the particles in the sample. Alternatively, the apparatus may be provided with a shutter to make stand still images but because a shutter comprises moving parts pulsed irradiation is more advantageous.

The radiation system 1 irradiates the sample via a diffuser plate 7. The function of the diffuser plate 7 is to make the irradiation of the vial 5 more uniform. A holder 9 for releasable holding the vial 5 is provided with a hole for receiving the vial 5 and with an opening for the irradiation to irradiate the vial 5 and with an opening for the camera to make images of the sample in the vial 5. The opening within the holder is along the optical axis O of the camera 11. The holder 9 comprises a temperature control system with a thermometer for controlling the temperature of the vial 5. The temperature control system may comprise a heater for heating the vial and/or a cooler for cooling the vial within a temperature range from -25°C until 180 °C.

The camera 11 which is a part of an analyser comprises a lens system 13 and a detector 15. The lens system 13 provides a telecentric image of a part of the sample in the vial 5 on the detector 15 so that the magnification of the particles in the sample is not dependent on the position of the particles in the image field. The camera comprises a lens and a detector and the lens provides a telecentric image of a part of the sample on the detector. As an alternative, cheaper non-telecentric optics may be used for the lens system. The detector 15 may be a Charge coupled device (CCD) array and detects an image of the particles in black and white or in full colour.

Telecentric lenses have the same magnification at all distances. Because their images have constant magnification and geometry, telecentric lenses are suitable for making images of particles that are moving within a vial and are not at a constant distance. The telecentric lens is also less sensitive for lens effects due to the curvature of the vial.

Telecentric lenses may be object-space telecentric, image space telecentric or double sided telecentric. An object-space telecentric lens creates images of the same size for objects at any distance in the sample and has constant angle of view across the entire field of view. An object or particle that is too close or too far from the lens may still be out of focus, but the resulting blurry image will be the same size as the correctly-focused image would be. Object-space telecentric lenses have an entrance pupil infinitely far behind the lens; this is, if you look in the front, the apparent aperture is very far away.

An image-space (or image-side) telecentric lens produces images of the same size regardless of the distance between the lens and the detector. This allows the lens to be focused to different distances without changing the size of the image. Image-space telecentric lenses have an exit pupil infinitely far in front of the lens; that is, if you look in the back of the lens, the apparent aperture is very far away. At the detector or image sensor, all of the principal rays from these lenses hit "straight on", or at zero angle of incidence. This property minimizes any angle-of-incidence dependence of the detector, or of any beamsplitter prism assembly behind the lens, such as a color separation prism in a three-CCD camera.

Lenses that are double sided telecentric are object-space telecentric and image-space (or image-side) telecentric and have magnification that is more precisely constant than those that are only object-side telecentric, because the principal ray intercept position on the detector doesn't change as well. This property allows precise measurement of objects regardless of position even better.

The camera may be provided with a diaphragm which may be opened completely. The depth of focus will be between 1 and 1,5 mm and the shutter speed may be between 5 and 50 millisecond, preferably 20 milliseconds and more preferably 10 milliseconds.

The camera 11 may be provided with a radiation intensity measurement system. The radiation intensity measurement system may be a separate unit or may form part of the detector 15. If the intensity measured by the radiation intensity measurement system of the radiation received through the vial is below a certain threshold value the radiation system 1 may be adjusted via a feed back loop 17 to irradiate more radiation. The detector may be provided with a comparing system to compare the radiation intensity of radiation received from the sample with the threshold value. It may also be advantageous to keep the background at a constant intensity, e.g. grey scale value. The apparatus is configured to measure the background intensity and to compare the background intensity with a threshold value and to increase the background illumination if the background intensity gets lower than the threshold and to decrease the background illumination if the background intensity gets higher than the threshold.

Figure 2 depicts a schematic top view on a sample analysis apparatus according to a second embodiment of the invention. The second embodiment is equal to the first embodiment accept for the items described below.

In the second embodiment of the invention a semi-transparent mirror 19 is provided in the optical path of the camera 11 having an optical axis O. If the vial 5 is irradiated by the first radiation system 1 the radiation is traversing through the vial 5 and the semi-transparent mirror 19 to the camera 11. This may be called back lighting.

The camera 11 may be provided with a radiation intensity measurement system and if the radiation received by the camera 11 is below a certain threshold the first radiation system 1 may be adjusted to irradiate more radiation to the vial 5. If however, the sample in the vial 5 becomes so turbid that adjusting the radiation intensity of the first radiation system 1 is not sufficient anymore, a radiation system switching device for switching between irradiation by the first radiation system 1 and irradiation by a second radiation system may be used. The switching device may be provided to the sensor 15 and may switch off the first radiation system 1 and switch on the second radiation system comprising a second light emitting diode 21 and a second diffuser plate 23 via the light control connection 25. The semitransparent mirror 19 will reflect the irradiation of the second radiation system to the sample 5 from the same direction as the camera 11 is looking at the vial 5. This may be called front lighting. The irradiation diffuse reflected by the sample in the vial 5 may be reflected through the semitransparent mirror and will be recorded by the camera 15. Front lighting of the sample in the vial is advantageous if the turbidity of the sample in the vial is high.

Figure 3 depicts a schematic top view on a sample analysis apparatus according to a third embodiment of the invention. The third embodiment is equal to the second embodiment accept for the items described below. The third embodiment discloses an alternative way of front lighting of the sample in the vial.

If the sample in the vial 5 becomes so turbid that adjusting the radiation intensity of the first radiation system 1 is not sufficient anymore, a radiation system switching device for switching between irradiation by the first radiation system 1 and irradiation by a second radiation system 27 may be used. The switching device may be provided to the sensor 15 and may switch off the first radiation system 1 and switch on the second radiation system 27 via the light control connection 25. The second radiation system 27 may be provided with a light surrounding the opening of the camera 11, which provides front lighting to the sample in the vial 5. The irradiation diffuse reflected by the sample in the vial 5 will be recorded by the camera 11. Front lighting of the sample in the vial is advantageous if the turbidity of the sample in the vial is high. The front lighting according to the third embodiment of the invention is cost effective since no semitransparent mirror is needed. The front lighting may also be accomplished by other radiation systems.

In the second and third embodiment according to the invention the front lighting is disclosed as an alternative for back lighting, however it must be understood that the front lighting may also be used in an analysis apparatus according to the invention without back lighting.

Figure 4 depicts a three dimensional view on a holder constructed for use in a sample analysis apparatus according to the invention. The holder 9 is provided with a hole for releasable receiving the vial 5 (as here depicted only the top of the vial is visible). The holder 9 is provided with an opening 29 and the irradiation of the first radiation system may traverse through the opening 29, through the vial 5 and via the opening on the other side of the holder to the camera. The holder 9 may be provided with a temperature control system with a thermometer, a cooler and heater for controlling the temperature of the vial in the holder. The holder 9 may be provided with electromagnets which are activated so as to rotate a magnet which may be connected to a stirrer in the vial so as to stir the sample in the vial 5.

The camera may be connected to a TV or computer screen so as to provide images of the sample on the screen. The sample analysis apparatus may comprises an image processing module for processing of the images made by the camera. The image processing module may have software for image analysis of the particle shape and size distribution of particles in the sample in the vial. The information about particle size and size distribution may be used for growing crystals. This may be done using a phenomena called Oswald ripening. This phenomena may be used if large crystals need to be grown. If the image processing unit detects crystals that are growing when the temperature is slowly increasing the reaction may be reversed by cooling until only a view big crystals are left. By then heating the sample again the crystals will grow again but the bigger crystals are growing faster. By repeating this method large crystals may be grown. The sample analysis apparatus according to the invention makes the growing of crystals a lot easier by providing real time images and data of the crystallisation process in the vial. In the above example heating and cooling were used for initiating and reversing the crystallisation process, however any kind of habit changing may be used to initiate or reverse the crystallisation process. For example, the stirring speed may be adjusted.

The sample analysis apparatus may be provided with a Raman spectroscopy branch, for measuring the Raman spectroscopy of the sample in the vial simultaneously with the image of the sample in the vial. Typically, the sample will be illuminated with a laser beam and radiation from the illuminated spot is collected with a lens and sent through a monochromator. Wavelengths close to the laser line are filtered out while the rest of the collected light is dispersed onto a detector forming the Raman scattering. Alternatively, light emitting diodes (LED's) may be used for illumination of the sample in the vial. LED's may be advantageous for Raman scattering because the light has a narrow bandwidth.

While specific embodiments of the invention have been described above, it will be appreciated that the invention may be practiced otherwise than as described. For example, the invention may take the form of a computer program containing one or more sequences of machine-readable instructions describing a method as disclosed above, or a data storage medium (e.g. semiconductor memory, magnetical or optical disk) having such a computer program stored therein.

The descriptions above are intended to be illustrative, not limiting. Thus it will be apparent to one skilled in the art that modifications may be made to the invention as described without departing from the scope of the claims set out below.

## Claims

1. A sample analysis apparatus comprising:
at least one radiation system (1) constructed and arranged to irradiate the sample in a vial (5);
an analyser provided with a camera (11) constructed and arranged to analyse the radiation received from the sample in the vial (5), wherein the apparatus is provided with a holder (9) constructed and arranged to releasable hold the vial and provided with an optical path for the radiation system (1) to irradiate the sample and for the camera (11) to make images of the sample, wherein the camera comprises a telecentric lens (13) and a detector 15; **characterised in that** the apparatus further comprises
a comparing system for comparing a radiation intensity of radiation received from the sample in the vial (5) with a radiation intensity threshold value; and
a radiation adjustment system to adjust an intensity of the radiation irradiated by the at least one radiation system (1) if the radiation intensity received from the sample is not equal to the radiation intensity threshold value,
wherein the apparatus further is configured to measure the background intensity and to compare the background intensity with a background intensity threshold value, and to increase the background illumination if the background intensity gets lower than the background intensity threshold value and to decrease the background illumination if the background intensity gets higher than the background intensity threshold value.

2. The apparatus according to claim 1, wherein the at least one radiation system (1) irradiates the sample in the vial (5) with pulsed irradiation.

3. The apparatus according to any of the preceding claims, wherein the holder (9) comprises a temperature control system provided with a thermometer for controlling the temperature of the vial (5) and the temperature control system is provided with a heater for heating the vial and/or a cooler for cooling the vial.

4. The apparatus according to any of the preceding claims, wherein the holder (9) is provided with a hole for releasable receiving the vial (5) and the at least one radiation system (1) and the camera (11) are constructed and arranged opposite each other with the hole in between so that the radiation system is irradiating the camera with radiation traversing through the vial in the hole.

5. The apparatus according to any of claims 1-3, wherein the holder (9) is provided with a hole for releasing and receiving the vial (5) and the at least one radiation system and the camera (11) are arranged on the same side of the hole and the at least one radiation system is arranged for irradiating the sample in the vial from the same direction as the camera is arranged for making images of radiation diffuse reflected from the sample in the vial (5).

6. The apparatus according to claim 5, wherein the at least one radiation system comprises a semitransparent mirror (19) which is arranged between the camera (11) and the hole so as to irradiate the sample in the vial from the same direction as the camera makes images of the sample in the vial.

7. The apparatus according to claim 5, wherein the at least one radiation system comprises a ring light (27) around the camera (11) so as to irradiate the sample in the vial (5) from the same direction as the camera is arranged for making images of the sample in the vial.

8. The apparatus according to any of the preceding claims, wherein the apparatus is provided with two radiation systems (1, 27), the apparatus being constructed and arranged so that the camera (11) detects radiation traversing through the vial from a first of the two radiation systems and detects radiation diffuse reflected from the sample in the vial from a second of the two radiation systems and the apparatus is provided with a radiation system switching device for switching between irradiation by the first radiation system and irradiation by the second radiation system.

9. The apparatus according to any of the preceding claims, wherein the analyser comprises an image processing module for processing of the images made by the camera (11), the image processing module being provided with software for image analysis of the particle shape and size distribution of particles in the sample in the vial (5).

10. The apparatus according to any of the preceding claims, wherein the telecentric lens (13) is constructed and arranged as an object-space telecentric lens creating images of the same size for objects at any distance in the sample.

11. The apparatus according to any of the preceding claims, wherein the telecentric lens (13) is constructed and arranged as an image-space telecentric lens creating images of the same size regardless of the distance between the lens and the detector (15).

12. The apparatus according to any of the preceding claims, wherein the telecentric lens (13) is double telecentric.

13. A method of analysing a sample, comprising:
providing a vial (5) with a sample releasable to a holder (9);
irradiating the sample in the vial with radiation;
recording images of the sample in the vial with a camera (11) comprising a lens (13) and a detector (15), the lens provides a telecentric image of a part of the sample on the detector and analysing the images with an image processing module so as to determine information about the particle size and/or size distribution of particles in the sample,
**characterised in that** the irradiating of the sample comprises:
comparing a radiation intensity of radiation received from the sample in the vial (5) with a radiation intensity threshold value;
adjusting an intensity of the irradiated radiation if the radiation intensity received from the sample is not equal to the radiation intensity threshold value; and
measuring the background intensity and comparing the background intensity with a background intensity threshold value, and increasing the background illumination if the background intensity gets lower than the background intensity threshold value and decreasing the background illumination if the background intensity gets higher than the background intensity threshold value.

14. The method according to claim 13, further comprising using the information about the particle size and/or size distribution of particles in the sample for changing reaction conditions in the vial (5), and changing the reaction conditions of the vial comprises heating or cooling of the vial.

## Patentansprüche

1. Probenanalysegerät, umfassend:
mindestens ein Bestrahlungssystem (1), das so konstruiert und angeordnet ist, dass es die Probe in einem Fläschchen (5) bestrahlt;
einen Analysator, der mit einer Kamera (11) ausgestattet ist und so konstruiert und angeordnet ist, dass er Strahlung analysiert, die von der Probe in dem Fläschchen (5) empfangen wird, wobei das Gerät mit einer Halterung (9) ausgestattet ist, der so konstruiert und angeordnet ist, dass sie das Fläschchen lösbar hält, und es mit einem optischen Weg für das Bestrahlungssystem (1), um die Probe zu bestrahlen, und für die Kamera (11), um Bilder der Probe zu machen, ausgestattet ist, wobei die Kamera ein telezentrisches Objektiv (13) und einen Detektor (15) umfasst;
**dadurch gekennzeichnet, dass** das Gerät ferner das Folgende umfasst:
ein Vergleichssystem zum Vergleichen von einer Strahlungsintensität der Strahlung, die von der Probe in dem Fläschchen (5) empfangen wird, mit einem Strahlungsintensitätsschwellenwert; und
ein Strahlungseinstellsystem zum Einstellen von einer Intensität der Strahlung, die von dem mindestens einen Bestrahlungssystem (1) abgestrahlt wird, wenn die Strahlungsintensität, die von der Probe empfangen wird, nicht gleich dem Strahlungsintensitätsschwellenwert ist,
wobei das Gerät ferner so konfiguriert ist, dass es die Hintergrundintensität misst und die Hintergrundintensität mit einem Hintergrundintensitätsschwellenwert vergleicht, und dass es die Hintergrundbeleuchtung erhöht, wenn die Hintergrundintensität niedriger als der Hintergrundintensitätsschwellenwert wird, und es die Hintergrundbeleuchtung verringert, wenn die Hintergrundintensität höher als der Hintergrundintensitätsschwellenwert wird.

2. Gerät nach Anspruch 1, wobei das mindestens eine Bestrahlungssystem (1) die Probe in dem Fläschchen (5) mit gepulster Strahlung bestrahlt.

3. Gerät nach einem der vorhergehenden Ansprüche, wobei die Halterung (9) ein Temperatursteuerungssystem umfasst, das mit einem Thermometer zum Steuern der Temperatur des Fläschchens (5) ausgestattet ist, und das Temperatursteuerungssystem mit einer Heizung zum Erwärmen des Fläschchens und/oder einem Kühler zum Kühlen des Fläschchens ausgestattet ist.

4. Gerät nach einem der vorhergehenden Ansprüche, wobei die Halterung (9) mit einem Loch zur lösbaren Aufnahme des Fläschchens (5) ausgestattet ist und das mindestens eine Bestrahlungssystem (1) und die Kamera (11) so konstruiert und einander gegenüberliegend angeordnet sind, wobei das Loch zwischen ihnen liegt, dass das Bestrahlungssystem die Kamera mit Strahlung bestrahlt, die durch das Fläschchen in dem Loch hindurchgeht.

5. Gerät nach einem der Ansprüche 1-3, wobei die Halterung (9) mit einem Loch zum Freigeben und Aufnehmen des Fläschchens (5) ausgestattet ist und das mindestens eine Bestrahlungssystem und die Kamera (11) auf derselben Seite des Lochs angeordnet sind und das mindestens eine Bestrahlungssystem angeordnet ist, um die Probe in dem Fläschchen aus derselben Richtung zu bestrahlen, aus der die Kamera Bilder der Strahlung, die von der Probe in dem Fläschchen (5) diffus reflektiert wird, macht.

6. Gerät nach Anspruch 5, wobei das mindestens eine Bestrahlungssystem einen halbtransparenten Spiegel (19) umfasst, der zwischen der Kamera (11) und dem Loch angeordnet ist, um die Probe in dem Fläschchen aus derselben Richtung zu bestrahlen, aus der die Kamera Bilder von der Probe in dem Fläschchen macht.

7. Gerät nach Anspruch 5, wobei das mindestens eine Bestrahlungssystem ein Ringlicht (27) um die Kamera (11) herum umfasst, um die Probe in dem Fläschchen (5) aus derselben Richtung zu bestrahlen, aus der die Kamera angeordnet ist, um Bilder von der Probe in dem Fläschchen zu machen.

8. Gerät nach einem der vorhergehenden Ansprüche, wobei das Gerät mit zwei Bestrahlungssystemen (1, 27) ausgestattet ist, wobei das Gerät so konstruiert und angeordnet ist, dass die Kamera (11) Strahlung, die durch das Fläschchen von einem ersten der beiden Bestrahlungssysteme hindurchgeht, und Strahlung, die von der Probe in dem Fläschchen von einem zweiten der beiden Bestrahlungssysteme diffus reflektiert wird, detektiert und das Gerät mit einer Bestrahlungssystem-Schaltvorrichtung zum Umschalten zwischen der Bestrahlung durch das erste Bestrahlungssystem und der Bestrahlung durch das zweite Bestrahlungssystem ausgestattet ist.

9. Gerät nach einem der vorhergehenden Ansprüche, wobei der Analysator ein Bildverarbeitungsmodul zur Verarbeitung der Bilder umfasst, die von der Kamera (11) gemacht werden, wobei das Bildverarbeitungsmodul mit einer Software zur Bildanalyse der Partikelform und Größenverteilung der Partikel in der Probe in dem Fläschchen (5) ausgestattet ist.

10. Gerät nach einem der vorhergehenden Ansprüche, wobei das telezentrische Objektiv (13) als ein Objekt-Raum-telezentrisches Objektiv konstruiert und angeordnet ist, das für Objekte in jeder Entfernung in der Probe Bilder derselben Größe erzeugt.

11. Gerät nach einem der vorhergehenden Ansprüche, wobei das telezentrische Objektiv (13) als ein Bild-Raum-telezentrisches Objektiv konstruiert und angeordnet ist, das unabhängig von der Entfernung zwischen dem Objektiv und dem Detektor (15) Bilder derselben Größe erzeugt.

12. Gerät nach einem der vorhergehenden Ansprüche, wobei das telezentrische Objektiv (13) doppelt telezentrisch ist.

13. Verfahren zum Analysieren von einer Probe, umfassend:
Bereitstellen von einem Fläschchen (5) mit einer Probe, das an einer Halterung (9) lösbar befestigt ist;
Bestrahlen von der Probe in dem Fläschchen mit Strahlung;
Aufzeichnen von Bildern der Probe in dem Fläschchen mit einer Kamera (11), die ein Objektiv (13) und einen Detektor (15) umfasst, wobei das Objektiv ein telezentrisches Bild von einem Teil der Probe auf dem Detektor bereitstellt, und Analysieren von den Bildern mit einem Bildverarbeitungsmodul, um Informationen über die Teilchengröße und/oder die Größenverteilung von Teilchen in der Probe zu ermitteln,
**dadurch gekennzeichnet, dass** das Bestrahlen der Probe das Folgende umfasst:
Vergleichen von einer Strahlungsintensität der Strahlung, die von der Probe in dem Fläschchen (5) empfangen wird, mit einem Strahlungsintensitätsschwellenwert;
Einstellen von einer Intensität der Bestrahlungsstrahlung, wenn die von der Probe empfangene Strahlungsintensität nicht gleich dem Strahlungsintensitätsschwellenwert ist; und
Messen von der Hintergrundintensität und Vergleichen von der Hintergrundintensität mit einem Hintergrundintensitätsschwellenwert und Erhöhen von der Hintergrundbeleuchtung, wenn die Hintergrundintensität niedriger als der Hintergrundintensitätsschwellenwert wird, und Verringern von der Hintergrundbeleuchtung, wenn die Hintergrundintensität höher als der Hintergrundintensitätsschwellenwert wird.

14. Verfahren nach Anspruch 13, ferner umfassend das Verwenden von den Informationen über die Partikelgröße und/oder die Größenverteilung der Partikel in der Probe zum Ändern der Reaktionsbedingungen in dem Fläschchen (5), und wobei das Ändern von den Reaktionsbedingungen des Fläschchens das Erwärmen oder Kühlen des Fläschchens umfasst.

## Revendications

1. Appareil d'analyse d'échantillons comprenant:
au moins un système (1) de rayonnement construit et agencé pour irradier l'échantillon dans un flacon (5) ;
un analyseur muni d'une caméra (11) construite et agencée pour analyser le rayonnement reçu de l'échantillon dans le flacon (5), dans lequel l'appareil est pourvu d'un support (9) construit et agencé pour supporter de façon libérable le flacon et muni d'un chemin optique pour que le système (1) de rayonnement irradie l'échantillon et pour que la caméra (11) prenne des images de l'échantillon, dans lequel la caméra comprend une lentille télécentrique (13) et un détecteur (15) ; **caractérisé en ce que** l'appareil comprend en outre
un système de comparaison pour comparer une intensité de rayonnement de rayonnement reçu de l'échantillon dans le flacon (5) à une valeur de seuil d'intensité de rayonnement, et
un système d'ajustement de rayonnement pour ajuster une intensité du rayonnement irradié par le au moins un système (1) de rayonnement si l'intensité de rayonnement reçu de l'échantillon n'est pas égale à la valeur de seuil d'intensité de rayonnement,
dans lequel l'appareil est en outre configuré pour mesurer l'intensité d'arrière-plan et pour comparer l'intensité d'arrière-plan à une valeur seuil d'intensité d'arrière-plan, et pour augmenter l'illumination d'arrière-plan si l'intensité d'arrière-plan devient inférieure à la valeur de seuil d'intensité d'arrière-plan et pour diminuer l'illumination d'arrière-plan si l'intensité d'arrière-plan devient supérieure à la valeur seuil d'intensité d'arrière-plan.

2. Appareil selon la revendication 1, dans lequel le au moins un système (1) de rayonnement irradie l'échantillon dans le flacon (5) avec une irradiation pulsée.

3. Appareil selon l'une quelconque des revendications précédentes, dans lequel le support (9) comprend un système de contrôle de température muni d'un thermomètre pour contrôler la température du flacon (5) et le système de contrôle de température est muni d'un chauffage pour chauffer le flacon et/ou un refroidisseur pour refroidir le flacon.

4. Appareil selon l'une quelconque des revendications précédentes, dans lequel le support (9) est pourvu d'un trou pour recevoir de façon libérable le flacon (5) et le au moins un système (1) de rayonnement et la caméra (11) sont construits et disposés en face l'un de l'autre avec le trou entre eux de sorte que le système de rayonnement irradie la caméra avec un rayonnement traversant le flacon dans le trou.

5. Appareil selon l'une quelconque des revendications 1 à 3, dans lequel le support (9) est pourvu d'un trou pour libérer et recevoir le flacon (5) et le au moins un système de rayonnement et la caméra (11) sont disposés du même côté du trou et le au moins un système de rayonnement est agencé pour irradier l'échantillon dans le flacon de la même direction que selon laquelle la caméra est agencée pour prendre des images de rayonnement diffus réfléchi de l'échantillon dans le flacon (5).

6. Appareil selon la revendication 5, dans lequel le au moins un système de rayonnement comprend un miroir (19) semi-transparent qui est disposé entre la caméra (11) et le trou de manière à irradier l'échantillon dans le flacon de la même direction que selon laquelle la caméra prend des images de l'échantillon dans le flacon.

7. Appareil selon la revendication 5, dans lequel le au moins un système de rayonnement comprend une lumière annulaire (27) autour de la caméra (11) de manière à irradier l'échantillon dans le flacon (5) de la même direction que selon laquelle la caméra est agencée pour prendre des images de l'échantillon dans le flacon.

8. Appareil selon l'une quelconque des revendications précédentes, dans lequel l'appareil est pourvu de deux systèmes (1, 27) de rayonnement, l'appareil étant construit et agencé de telle sorte que la caméra (11) détecte un rayonnement traversant le flacon d'un premier des deux systèmes de rayonnement et détecte un rayonnement diffus réfléchi de l'échantillon dans le flacon d'un deuxième des deux systèmes de rayonnement et l'appareil est muni d'un dispositif de commutation de système de rayonnement pour commuter entre une irradiation par le premier système de rayonnement et une irradiation par le deuxième système de rayonnement.

9. Appareil selon l'une quelconque des revendications précédentes, dans lequel l'analyseur comprend un module de traitement d'image pour traiter les images prises par la caméra (11), le module de traitement d'image étant muni d'un logiciel d'analyse d'image de la forme de particules et de la distribution de taille des particules dans l'échantillon dans le flacon (5).

10. Appareil selon l'une quelconque des revendications précédentes, dans lequel la lentille télécentrique (13) est construite et agencée comme une lentille télécentrique d'espace objet créant des images de la même taille pour des objets à n'importe quelle distance dans l'échantillon.

11. Appareil selon l'une quelconque des revendications précédentes, dans lequel la lentille télécentrique (13) est construite et agencée comme une lentille télécentrique d'espace image créant des images de la même taille quelle que soit la distance entre la lentille et le détecteur (15).

12. Appareil selon l'une quelconque des revendications précédentes, dans lequel la lentille télécentrique (13) est à double télécentrique.

13. Procédé d'analyse d'un échantillon comprenant les étapes de:
fournir sur un support (9) de façon libérable un flacon (5) avec un échantillon;
irradier l'échantillon dans le flacon avec un rayonnement;
enregistrer des images de l'échantillon dans le flacon avec une caméra (11) comprenant une lentille (13) et un détecteur (15), la lentille fournissant une image télécentrique d'une partie de l'échantillon sur le détecteur, et analyser les images avec un module de traitement d'image afin de déterminer des informations sur la taille des particules et/ou une distribution de taille des particules dans l'échantillon,
**caractérisé en ce que** l'irradiation de l'échantillon comprend les étapes de :
comparer une intensité de rayonnement de rayonnement reçu de l'échantillon dans le flacon (5) à une valeur de seuil d'intensité de rayonnement ;
ajuster une intensité du rayonnement irradié si l'intensité de rayonnement reçu de l'échantillon n'est pas égale à la valeur de seuil ;
mesurer l'intensité d'arrière-plan et comparer l'intensité d'arrière-plan à une valeur seuil d'intensité de rayonnement d'arrière-plan, et augmenter l'illumination d'arrière-plan si l'intensité d'arrière-plan devient inférieure à la valeur seuil d'intensité de rayonnement d'arrière-plan et diminuer l'illumination d'arrière-plan si l'intensité d'arrière-plan devient supérieure à la valeur seuil d'intensité de rayonnement d'arrière-plan.

14. Procédé selon la revendication 13, comprenant en outre l'étape d'utiliser des informations sur la taille des particules et/ou la distribution de taille des particules dans l'échantillon pour changer des conditions de réaction dans le flacon (5), et modifier des conditions de réaction du flacon comprend chauffer ou refroidir le flacon.
